# EUROPÄISCHE PATENTSCHRIFT

(11) **EP 2 058 213 B1**
(45) Veröffentlichungstag und Bekanntmachung des Hinweises auf die Patenterteilung: **18.09.2013**
(21) Anmeldenummer: 08168348.4
(22) Anmeldetag: 05.11.2008
(51) Int. Cl.: B62D 33/06, B60P 3/38

(54) **Vorrichtung zum Halten von Einrichtungsgegenständen, Racksystem mit einem Gestell und Nutzfkraftfahrzeug mit einer Fahrzeugführerkabine**
Device for holding interior fittings objects, rack system with a frame and commercial vehicle with a driver's cabin
Dispositif destiné à maintenir des objets d'aménagement, arrangement superposé doté d'une structure avec cadre et véhicule utilitaire doté d'une cabine de conducteur

(30) Priorität: 07.11.2007 DE 102007053579; 15.09.2008 DE 102008047435; 03.11.2008 DE 102008055671
(43) Veröffentlichungstag der Anmeldung: 13.05.2009
(73) Patentinhaber: Mo.T.I.S. GmbH Modular Truck Interior System, 50829 Köln (DE)
(72) Erfinder: Tomforde, Johann Prof., 71069 Sindelfingen-Maichingen (DE); Moreno, Claudio, 71065 Sindelfingen (DE); Lambert, Ralf, 75223 Niefern (DE)
(74) Vertreter: Hannke, Christian

(56) Entgegenhaltungen:
- EP-A- 0 309 692
- EP-A- 1 270 381
- WO-A-02/16172
- WO-A-2008/073026
- GB-A- 1 410 440

## Beschreibung

Die Erfindung betrifft einerseits eine Vorrichtung gemäß Dokument WO 02/16172 zum Halten von Einrichtungsgegenständen, wie etwa einer Ruheeinrichtung oder dergleichen, mit einem Gestell, welches in einer Nutzfahrzeugkabine hinter einem Fahrersitz und/oder hinter einem Beifahrersitz anordenbar ist. Andererseits betrifft die Erfindung ein Racksystem mit einem Gestell für eine Nutzfahrzeugkabine. Auch betrifft die Erfindung ein Nutzkraftfahrzeug mit einer Fahrzeugführerkabine.

Häufig sind derartige Nutzfahrzeugkabinen derart gestaltet, dass zwei Fahrzeugsitze, nämlich ein Fahrersitz und ein Beifahrersitz, in einem vorderen Teil der Nutzfahrzeugkabine und nur ein Aufenthaltsbereich in einem hinteren Teil der Nutzfahrzeugkabine angeordnet sind. Nachteilhaft hierbei ist es, dass der hintere Teil der Nutzfahrzeugkabine nur wenig optimiert ausgenutzt werden kann, beispielsweise in dem lediglich ein auf und zu klappbares Bett an der Rückwand der Nutzfahrzeugkabine angebracht ist und der restliche Raum in diesem Bereich nicht gut genutzt werden kann. Da zudem die Rückenlehne des Fahrzeugsitzes nach hinten neigbar sein muss, um während der Fahrt bequem sitzen zu können, ergibt sich häufig der weitere Nachteil, dass der hinter den Sitzen liegende Freiraum zumindest während der Fahrt nur sehr begrenzt genutzt werden kann.

Um nun in einer Nutzfahrzeugkabine eines Nutzkraftfahrzeugs Einrichtungsgegenstände, wie beispielsweise Schlaf-, Wasch- und/oder Kochgelegenheiten oder dergleichen, verkehrsgerecht und betriebssicher unterbringen zu können, sollten derartige Einrichtungsgegenstände ortsfest in der Nutzfahrzeugkabine befestigt sein. Dies geschieht bisher jedoch nicht optimal und/oder nicht sicher genug, sodass ein in der Nutzfahrzeugkabine zur Verfügung stehender Freiraum meistens nicht gut genutzt werden kann.

Es ist Aufgabe der Erfindung die angesprochenen Nachteile zu beseitigen und einen hinter den Sitzen einer Nutzfahrzeugkabine zur Verfügung stehenden Freiraum funktionell und ergonomisch besser sowie besonders crashsicher ausnutzen zu können.

Die Aufgabe der Erfindung wird von einer Vorrichtung zum Halten von Einrichtungsgegenständen, wie etwa einer Ruheeinrichtung oder dergleichen, mit einem Gestell gelöst, welches in einer Nutzfahrzeugkabine hinter einem Fahrersitz und/oder hinter einem Beifahrersitz anordenbar ist, wobei sich die Vorrichtung dadurch auszeichnet, dass das Gestell an seiner dem Fahrersitz und/oder dem Beifahrersitz zugewandten Seite konvex ausgebildet ist.

Dadurch, dass das Gestell insbesondere an seiner dem Fahrersitz und/oder dem Beifahrersitz zugewandten Seite konvex ausgebildet ist, ist eine im Wesentliche bauchige Vorrichtung zum Halten von Einrichtungsgegenständen hinter den Sitzen bereitgestellt, mittels welcher der hinter den Sitzen liegende Freiraum besonders großvolumig und damit vorteilhaft von der Vorrichtung ausgenutzt werden kann.

Besonders vorteilhaft ist es, wenn der bauchige Bereich der Vorrichtung im Wesentlichen unmittelbar hinter den Rückenlehnen der Sitze angeordnet ist, sodass der Freiraum im Bereich des Kabinenbodens optimal von der Vorrichtung ausgefüllt werden kann. Der weiter zur Kabinendecke hin befindliche Bereich des Freiraums steht hierbei weiterhin als unverbauter Kopfraum für das Fahrpersonal zur Verfügung, da die Vorrichtung dort nicht so weit in die Kabine hineinragt, wie der darunter liegende bauchige Bereich der Vorrichtung.

Der Begriff "Nutzfahrzeugkabine" beschreibt vorliegend eine Fahrzeugführerkabine eines Nutzkraftfahrzeugs, wie die eines Lastkraftwagens, bei welchem das Fahrpersonal mehrere Tage unterwegs ist. Bevorzugt wird die Nutzfahrzeugkabine hierbei auch als Raum zum Schlafen, Waschen und/oder Kochen verwendet.

Bei einer anderen Lösung der Aufgabe der Erfindung ist ein Racksystem mit einem Gestell für eine Nutzfahrzeugkabine vorgeschlagen, welches sich dadurch auszeichnet, dass eine erste Gestellhälfte des Gestells hinter einem Fahrersitz und eine weitere Gestellhälfte des Gestells hinter einem Beifahrersitz angeordnet ist, wobei zwischen den beiden Gestellhälften ein begehbarer Bereich der Nutzfahrzeugkabine angeordnet ist.

Insbesondere ist es mittels derartig angeordneter Gestellhälften besonders gut möglich, den Freiraum unmittelbar hinter dem Fahrersitz bzw. hinter dem Beifahrersitz optimal zu nutzen, während der Bereich zwischen den beiden Gestellhälften vorteilhafter Weise für eine Verlängerung eines Mittelgangs der Nutzfahrzeugkabine bereitsteht. Darüber hinaus können von dem begehbaren Bereich aus Öffnungen einzelner Module des Racksystems wesentlich besser erreicht werden. Insbesondere können die Öffnungen bzw. die Module hierdurch auch quer zu der Fahrtrichtung angeordnet werden, wodurch die Module im Crashfall wesentlich besser gesichert werden können, da sie sich flächig in Fahrtrichtung an im Wesentlich vertikal verlaufenden Gestellbestandteilen abstützen können.

Der Begriff "Racksystem" beschreibt vorliegend jegliche Systeme, in welche bzw. an welchen Einrichtungsgegenstände verkehrssicher in der Nutzfahrzeugkabine platziert und befestigt werden können. Idealerweise handelt es sich bei dem vorliegenden Racksystem um ein selbsttragendes Racksystem, bei welchem insbesondere das Gestell eine zusammenhängende und selbsttragende Konstruktion darstellt. Insofern ist das hier beschriebene Racksystem eine in sich eigensteife Konstruktion, unabhängig von einer Befestigung in einer Nutzfahrzeugkabine.

Deshalb sieht eine außergewöhnlich sichere Ausführungsvariante auch vor, dass das Racksystem ein selbsttragendes Racksystem ist.

Somit kann ein vorteilhaftes System in einer Nutzfahrzeugkabine bereitgestellt werden, welches zum Einen die Anbringung von zu nutzenden Gegenständen im hinteren Bereich der Nutzfahrzeugkabine ermöglicht und welches zum Anderen eine maximale Ausnutzung der Nutzfahrzeugkabine sowohl im hinteren als auch im vorderen Bereich ermöglicht, auch unter der Berücksichtigung, dass eine Rückenlehne zumindest während der Fahrt nach hinten verschwenkt werden muss.

Besonders vorteilhaft ist es auch im Zusammenhang mit dem Racksystem, wenn wenigstens eine der Gestellhälften, vorzugsweise beide Gestellhälften, in einem dem Fahrersitz und/oder einem Beifahrersitz zugewandten Bereich konvex ausgebildet ist. Durch eine hierdurch bedingte bauchige Ausbildung der Gestellhälften kann ein Freiraum hinter den Sitzen einer Nutzfahrzeugkabine, zumindest unmittelbar hinter dem jeweiligen Sitz, wesentlich besser genutzt werden, als bisher möglich.

Um eine derart konvexe Gestalt der Vorrichtung bzw. des Racksystems konstruktiv einfach zu erhalten, weist das Gestell im Wesentlichen vertikal verlaufende Profilbauteile auf, welche bogenförmig gestaltet sind. Vorzugsweise verlaufen die Profilbauteile hierbei gekrümmt von einer Kabinendecke zu einem Kabinenboden der Nutzfahrzeugkabine.

In einer konkreten Ausführungsvarianten ist vorteilhaft vorgesehen, dass die bogenförmig gestalteten und im Wesentlichen vertikal verlaufenden Profilbauteile an einer dem Fahrersitz und/oder dem Beifahrersitz zugewandten Seite oder in einem dem Fahrersitz und/oder dem Beifahrersitz zugewandten Bereich angeordnet sind. Somit ist die bauchige Gestalt der Vorrichtung bzw. des Racksystems in die Nutzfahrzeugkabine hinein problemlos realisierbar.

Es versteht sich, dass die Profilbauteile vielfältig gestaltet werden können. Besonders einfach kann das Gestell aufgebaut werden, wenn die im Wesentlichen vertikal verlaufenden Profilbauteile des Gestells bogenförmig gestaltete Profilstangen, Profilschienen und/oder Profilbleche aufweisen.

Beispielsweise können die vorliegenden Profilbauteile mittels Profilstangen aus einem Quadrat-, Rechteck- und/oder Rundrohr hergestellt sein. Auch Profilschienen aus unterschiedlich geformten Blechen können dazu beitragen, dass das Gestell einen einfachen und praktischen Aufbau erhält. Ebenso kann es vorteilhaft sein, wenn das Gestell Profilbleche aufweist, mittels welchen die Profilbauteile bereitgestellt werden können. Solche Profilbleche können konstruktiv einfach als Tiefziehbauteile ausgebildet sein.

Es versteht sich, dass das Gestell und/oder Teile hiervon aus Metall und/oder Kunststoff hergestellt sein können, um eine optimierte Lösung erzielen zu können.

Erfindungsgemäß ist vorgesehen, dass das Gestell der Vorrichtung bzw. des Racksystems bogenförmig gestaltete und im Wesentlichen vertikal verlaufende Profilbauteile aufweist, wobei jeweils zwei bogenförmig gestaltete und vertikal verlaufende Profilbauteile ein Profilbauteilpaar bilden, zwischen welchen jeweils ein Verkleidungsblech des Gestells angeordnet ist. Mittels eines zwischen einem Profilbauteilpaar platzierten Verkleidungsblechs kann das Gestell eine baulich einfach geschlossene Oberfläche erhalten, sodass eine kompakt geschlossene Vorrichtung bzw. ein kompakt geschlossenes Racksystem in der Nutzfahrzeugkabine eingebaut werden kann.

Die vorliegenden Verkleidungsbleche können baulich besonders einfach und stabil jeweils als ein Tiefziehbauteil gestaltet sein.

Damit innerhalb des Gestells bzw. einer der Gestellhälften ein möglichst großes Bauvolumen speziell zum Unterbringen von Einrichtungsgegenständen zur Verfügung stehen kann, ist es vorteilhaft, wenn das Verkleidungsblech zumindest teilweise konvex gewölbt ist. Vorzugsweise entspricht die Krümmung des Verkleidungsbleches der Krümmung des Profilbauteilpaars, sodass der Bauraum sowohl innerhalb als auch außerhalb des Gestells besonders gut genutzt werden kann.

Ist das Verkleidungsblech zumindest teilweise konkav gewölbt, kann außerhalb des Gestells mehr Platz bereitgestellt werden, um beispielsweise eine Rückenlehne eines Sitzes schräg nach hinten verstellen zu können.

Die hier beschriebenen Verkleidungsbleche können besonders schnell zwischen zwei im Wesentlichen vertikal verlaufenden Profilstangen montiert und demontiert werden. Beispielsweise kann ein mittleres hinteres Verkleidungsteil in einer Nut von hinteren mittleren Gestellteilen bzw. entsprechender Profilstangen gehalten werden. Für eine schnelle und eindeutige Montage können Zwischenböden anstatt verschiebbar auch in einer eindeutigen Position ortsfest befestigt werden, wie zum Beispiel verschraubt oder vernietet werden.

Kumulativ ist es vorteilhaft, wenn vertikal verlaufende Profilbauteile des Gestells eine zumindest teilweise konvex gestaltete Einhüllende der Vorrichtung bzw. des Racksystems bilden, und innerhalb der konvex gestalteten Einhüllenden konvex und/oder konkav gewölbte Verkleidungsbleche angeordnet sind.

Hierdurch können die Verkleidungsbleche vorteilhaft in die Vorrichtung bzw. in das Racksystem integriert werden. Dies kann vorteilhafter Weise auch auf weitere Komponenten der Vorrichtung bzw. des Racksystems zutreffen, wie etwa im Speziellen auch auf einige der Einrichtungsgegenstände der Vorrichtung bzw. des Racksystems.

Der Begriff "Einhüllende" beschreibt vorliegend eine fiktive Hülle der Vorrichtung bzw. des Racksystems, welche von äußeren Bauteilrändern der Vorrichtung bzw. des Racksystems, wie insbesondere von den Profilbauteilen, virtuell aufgespannt werden kann.

Besonders vorteilhaft ist es, wenn innerhalb der konvex gestalteten Einhüllenden zumindest einer der Sitze oder eine Rücklehne zumindest einer der Sitze wenigstens teilweise anordenbar ist. Somit kann idealerweise die Rückenlehne des Fahrersitzes innerhalb der konvex gestalteten Einhüllenden angeordnet werden, sodass die Rückenlehne des Fahrersitzes vorteilhafter Weise besonders weit nach hinten gekippt werden kann.

Eine besonders bevorzugte Ausführungsvariante sieht eine Ruheeinrichtung mit einem Zustieg vor, wobei der Zustieg innerhalb des Gestells, insbesondere zwischen zwei Gestellhälften des Gestells, angeordnet ist. Die Ruheeinrichtung kann hierbei zum Ausruhen bzw. zum Schlafen des Fahrpersonals dienen. Besonders einfach ist die Ruheeinrichtung zugänglich, wenn sie einen Zustieg aufweist. Ist der Zustieg zwischen zwei Gestellhälften des Gestells der vorliegenden Vorrichtung bzw. des Racksystems vorgesehen, kann der Freiraum im hinteren Teil der Nutzfahrzeugkabine nochmals effektiver genutzt werden.

Besonders platzsparend und wenig störend kann eine derartige Ruheeinrichtung innerhalb der Nutzfahrzeugkabine integriert werden, wenn die Ruheeinrichtung in eine Fahrposition gebracht werden kann, bei welcher die Ruheeinrichtung oberhalb der Vorrichtung oder oberhalb des Recksystems angeordnet ist. Hierbei befindet sich die Nutzfahrzeugkabine im Wesentlichen in einem fahrbereiten Zustand.

Die Ruheeinrichtung kann außergewöhnlich gut genutzt werden, wenn die Ruheeinrichtung in eine Ruheposition gebracht werden kann, bei welcher die Ruheeinrichtung vor der Vorrichtung oder vor dem Racksystem angeordnet ist. Hierbei befindet sich die Ruheeinrichtung vorzugsweise zumindest teilweise oberhalb der Sitzflächen der Sitze und gleichzeitig zumindest vor der Rückenlehne des Fahrersitzes, wodurch während des Ruhens bzw. Schlafens des Fahrpersonals auch der vordere Teil der Nutzfahrzeugkabine gut genutzt werden kann.

Vorzugsweise befindet sich die Rückenlehne des Beifahrersitzes bei einer in die Ruheposition verlagerten Ruheeinrichtung unterhalb der Ruheeinrichtung, sodass eine konvex ausgebildete Gestellhälfte besonders weit in die Nutzfahrzeugkabine hinein reichen und eine konvex ausgebildete Gestellhälfte hinter dem Beifahrersitz angeordnete konvex ausgebildete Gestellhälfte besonders effektiv genutzt werden kann.

Idealerweise ist die Rückenlehne des Fahrersitzes zumindest teilweise innerhalb der konvex gestalteten Einhüllenden des Gestells angeordnet, wenn die Ruheeinrichtung in die Ruheposition verlagert ist. Hierdurch kann die Rückenlehne des Fahrersitzes in einer im Wesentlichen vertikalen Ausrichtung verbleiben, sodass der Fahrersitz in einem Notfall sofort einsatzbereit ist, sobald die Ruheeinrichtung zurück in die Fahrposition verlagert ist.

Somit ist es auch vorteilhaft, wenn der Fahrersitz bei eingestellter Ruheposition der Ruheeinrichtung innerhalb des Gestells, vorzugsweise innerhalb einer Gestellhälfte des Gestells, bzw. innerhalb einer Einhüllenden des Gestells, angeordnet ist. Hierdurch kann die Nutzfahrzeugkabine schneller wieder fahrbereit hergestellt werden.

Um die Ruheeinrichtung vorteilhaft von der Fahrposition in die Ruheposition und umgekehrt verlagern zu können, ist es vorteilhaft, wenn die Vorrichtung oder das Racksystem einen Hubmechanismus zum vertikalen Verlagern einer Ruheeinrichtung aufweist, welcher drehbar gelagerte Tragarme umfasst.

Die Ruheeinrichtung kann konstruktiv einfach selbst für hohe Belastungen ausgelegt werden, wenn zusätzlich Mittel zum Halten einer Ruheeinrichtung vorgesehen sind, welche an Deckenbereichen der Nutzfahrzeugkabine verankert sind.

Das Raumvolumen der Vorrichtung bzw. des Racksystems kann außerordentlich gut genutzt werden, wenn die Vorrichtung oder das Racksystem Moduleinheiten zum Aufnehmen von Funktionseinrichtungen aufweist, wie vorzugsweise Schubladen, einem Kühlschrank, einer Kaffeemaschine und/oder dergleichen.

Ist wenigstens eine der Moduleinheiten von einem begehbaren Bereich der Nutzfahrzeugkabine, vorzugsweise von einem zwischen zwei Gestellhälften des Gestells angeordneten Bereich, aus zugänglich, kann der hintere Teil der Nutzfahrzeugkabine nochmals besser genutzt werden.

Einen besonders funktionalen und komfortablen Aufbau kann die Vorrichtung bzw. das Racksystem aufweisen, wenn Module, wie etwa ein Herd, ein Waschbecken, eine Toilette oder dergleichen, wenigstens einer Moduleinheit aus der Vorrichtung bzw. dem Racksystem ausziehbar innerhalb des Gestells angeordnet sind.

Der hintere Teil der Nutzfahrzeugkabine kann nochmals besser genutzt werden, wenn gerade gestaltete und im Wesentlichen vertikal verlaufende Profilbauteile des Gestells vorgesehen sind, welche an einer dem Fahrersitz und/oder dem Beifahrersitz abgewandten Seite des Gestells angeordnet sind. Mittels solcher gerade gestalteten und im Wesentlichen vertikal verlaufenden Profilbauteile kann das Gestell besonders betriebssicher auch an der hinteren Nutzfahrzeugkabinenwand befestigt werden.

Verschiedene Moduleinheiten können konstruktiv enorm einfach an dem Gestell verwirklicht werden, wenn im Wesentlichen horizontal verlaufende Profilbauteile des Gestells vorgesehen werden, welche das Gestell in horizontale Ebenen unterteilen. Derartige horizontal verlaufende Profilbauteil können beispielsweise durch gerade gestaltete Profilstangen, Profilschienen und/oder Profilbleche bereitgestellt werden.

Das gesamte Gestell der Vorrichtung bzw. des Racksystems kann sehr verwindungssteif gebaut sein, wenn Gestellhälften des Gestells eine gemeinsame Bodenplatte aufweisen. In einem sehr einfachen Aufbau kann der Nutzfahrzeugkabinenboden diese Bodenplatte bilden.

Die Vorrichtung bzw. das Racksystem kann schnell, vielseitig und unkompliziert umgebaut bzw. an unterschiedliche Anforderungen angepasst werden, wenn Profilbauteile der Vorrichtung bzw. des Racksystems, insbesondere des Gestells, Fugenelemente zum Aufnehmen von darin verschiebbaren Klemmelementen umfasst. Die verschiebbaren Klemmelemente können hierbei nahezu beliebig innerhalb der Fugenelemente verschoben und dann verklemmt werden, sodass die Vorrichtung bzw. das Racksystem sehr individuell auf die jeweilige Nutzfahrzeugkabine eingestellt werden kann. Dies ist insbesondere bei einem nachträglichen Einbau der Vorrichtung bzw. des Racksystems in eine Nutzfahrzeugkabine vorteilhaft.

Die Vorrichtung bzw. das Racksystem kann vielseitig eingesetzt und an unterschiedlichste Nutzfahrzeugkabinen angepasst werden, wenn die Vorrichtung bzw. das Racksystem einen modularen Aufbau aufweist.

Der Begriff "modularer Aufbau" beschreibt vorliegend, dass die Vorrichtung bzw. das Racksystem idealerweise ausschließlich aus vorgefertigten Komponenten für unterschiedlich große Nutzfahrzeugkabinen zusammengesetzt werden können, wobei auch, je nach Kundenwunsch, unterschiedliche Moduleinheiten verbaut werden können.

Beispielsweise ist ein ausklappbarer Tisch zwischen den beiden Gestellhälften des Gestells angeordnet, wodurch der Bereich zwischen den beiden Gestellhälften sehr gut auch als Ablagefläche genutzt werden kann. Wird der Tisch nicht benötigt, kann er gegen die rückwärtige Wand der Nutzfahrzeugkabine geklappt werden, wodurch wieder ein begehbarer Bereich zwischen den beiden Gestellhälften entstehen kann.

Insbesondere bei ausgeklapptem Tisch ist es vorteilhaft, wenn sowohl der Fahrersitz als auch der Beifahrersitz um ca. 90° gedreht werden können, sodass ein Hinwenden beider Sitze zu dem mittig angeordneten Tisch möglich ist.

Auch wird die Aufgabe der Erfindung von einem Nutzkraftfahrzeug mit einer Fahrzeugführerkabine gelöst, bei welchem die Fahrzeugkabine eine Vorrichtung oder ein Racksystem nach einem der erläuterten Merkmale und/oder nach einer der erläuterten Merkmalskombinationen aufweist.

Vorteilhafter Weise kann die Nutzfahrzeugkabine bzw. die Fahrzeugführerkabine in einem konkreten Ausführungsbeispiel mit im Wesentlichen bogenförmigen Stangenelementen, die sich von oben nach unten erstrecken, unmittelbar hinter den Fahrzeugsitzen ausgestattet sein, wobei geeignete Einbauten zwischen den Stangenelementen derart ausgestattet sind, dass insbesondere die Rückenlehne des Fahrersitzes in dem auf die Höhe bezogen mittleren Bereich der bogenförmigen Stangenelemente nach hinten geneigt werden kann, sodass diese Rückenlehne sich an die Form der Einbauten anlehnen kann bzw. die Einbauten entsprechend der Sitzausbildung im rückwärtigen Bereich geformt sein können. Vorteilhaft ist hierbei nicht nur ein einzelnes Stangenelement sondern eine Mehrzahl an Stangenelementen, wie beispielsweise vier Stangenelemente, hinter den Fahrzeugsitzen angeordnet, wobei vorzugsweise jeweils zwei solcher Stangenelemente im Bereich des Fahrerfahrzeugsitzes und zwei solcher Stangenelemente im Bereich des Beifahrerfahrzeugsitzes vorhanden sind. Dazwischen kann ein Durchgang angeordnet werden, der den Zugang zu dem hinteren Teil der Nutzfahrzeugkabine ermöglicht.

Vorzugsweise befindet sich jeweils ein Profilbauteilpaar hinter jeweils einem Sitz. Eine Rückenlehne eines Sitzes kann hierbei vorzugsweise zwischen zwei Profilstangen eines Profilbauteilpaars hindurch schwenken.

Insbesondere ein mittels der bogenförmigen Stangenelemente aufgebautes Racksystem kann dann vorteilhaft mittels darin eingearbeiteter Fugenelemente bzw. nutenförmiger Elemente genutzt werden. Vorteilhafter Weise sind nicht nur derartige nutenförmige Elemente, die sich vorzugsweise über die gesamte Längsseite der Stangenelemente auf deren Vorderseiten, auf deren Hinterseiten und/oder auf deren linksseitigen und rechtsseitigen Seiten befinden können, derart ausgebildet, dass sie entsprechende Klemmbolzen oder derartige Elemente oder Bauteile zum hierin Verschieben und Fixieren aufnehmen können. Hierdurch kann baulich einfach auch ein Herunterschwenken einer Ruheeinrichtung bzw. eines Bettes, welches im Wesentlichen unterhalb der Kabinendecke angebracht ist und welches von oben nach unten geschwenkt werden soll, um in eine Ruhe- bzw. Schlafposition gebracht zu werden, ermöglicht werden. Die Ruheeinrichtung bzw. das Bett kann hierbei mit Tragarmen und/oder Riemen rackseitig befestigt sein und mittels dieser Riemen nach unten deckenseitig abgehängt werden, bis die Riemen und die Tragarme in einem ausgezogenem Zustand die Ruheeinrichtung bzw. das Bett in Schlafposition mit einem festen Abstand zur Kabinendecke der Nutzfahrzeugkabine halten. In dieser Schlafposition ist die Rückenlehne des Fahrersitzes vorteilhafter Weise nach hinten geklappt, um ein schnelles Wegfahren in Notsituationen zu ermöglichen, wie vorstehend bereits beschrieben wurde. Der Beifahrersitz hingegen kann hierbei nach vorne geklappt werden.

Eine oder mehrere der Stangenelemente kann bzw. können auf der Höhe der Schlafposition der Ruheeinrichtung bzw. des Bettes eine Hakeneinrichtung oder eine sonstige Befestigungseinrichtung aufweisen, die im Wesentlichen dazu dient, die Ruheeinrichtung bzw. das Bett in dieser Position einzuhaken und einen zumindest an seinem zur hinteren Wand der Nutzfahrzeugkabine hingewandten Rand zu befestigen, sodass ein Hin- und Herschwenken der Ruheeinrichtung bzw. des Bettes, welches beispielsweise an den Riemen und Tragarmen aufgehängt ist, sowohl in Längs- als auch in Seitenrichtung vorteilhaft vermieden werden kann.

Insbesondere durch ein Vorsehen derartiger Hakeneinrichtungen kann es auch ermöglicht werden, dass die Ruheeinrichtung bzw. das Bett nicht entlang einer geeigneten Schiene nach unten verfahren werden muss, sondern freihängend von der Decke etwa mittels der Riemen und Tragarme herabgelassen werden kann, sodass eine Arretierung der Ruheeinrichtung bzw. des Bettes erst im herabgelassenen Zustand, also in der Ruheposition der Ruhevorrichtung bzw. des Bettes durch die Hakenvorrichtungen stattfinden kann.

Sofern die Ruheposition der Ruheeinrichtung bzw. des Bettes in einem Bereich liegt, in dem die bogenförmigen Stangenelemente ihren mittleren Bereich aufweisen, kann die Ruheeinrichtung bzw. das Bett mit einem hinteren Rand im eher schräg gestellten Teil der bogenförmigen Stangenelemente auftreffen und somit bei entsprechend genauer Positionierung der Hakeneinrichtungen automatisiert in die Hakeneinrichtung einrasten, wodurch die Ruheeinrichtung bzw. das Bett baulich einfach an dem Gestell des Racksystems justiert und festgelegt werden kann.

Die Ruheeinrichtung bzw. das Bett kann hierbei mit seinem vorderen Rand vorteilhaft insbesondere auf der nach vorne geklappten Rückenlehne des Beifahrersitzes abgelegt werden, sodass bei Benutzung der Ruheeinrichtung bzw. des Bettes diese bzw. dieses nicht nur von oben mittels Zugkräfte sondern auch von unten mittels Druckkräfte gehalten werden kann.

Dadurch, dass die Ruheeinrichtung bzw. das Bett in der Ruheposition nun insbesondere auch im vorderen Teil der Nutzfahrzeugkabine angeordnet ist, kann der hintere Teil der Nutzfahrzeugkabine vorteilhaft zu weiteren Nutzungszwecken verwendet werden, wie beispielsweise zum Kochen, zum Anordnen eines Kühlschranks, zum Anordnen einer Dusche oder einer sonstigen Waschgelegenheit oder für die Ausbildung einer Toilette oder einer Mehrzahl der aufgeführten Elemente bzw. Module. Beispielsweise werden hierzu die einzelnen Module aus dem Gestell heraus gezogen. Hierbei ist vorteilhaft, dass die Stangenelemente des vorliegenden Gestells bogenförmig ausgebildet sind und somit auch denjenigen Freiraum für den hinteren Teil ausnutzen können, der im unteren Bereich, also im Bereich des Nutzfahrzeugkabinenbodens, dadurch entsteht, dass die Bogenform sich eng an dem unteren Bereich der Fahrzeugsitze anpassen und den vorhandenen Raum zwischen den Stangenelementen und dem Fahrzeugsitz im unteren Bereich ausnutzen kann.

Vorzugsweise sind die vorliegenden bogenförmigen Stangenelemente für ein problemloses und stabiles Anordnen der einzelnen Funktionseinrichtungen bzw. Module, wie beispielsweise ein Herd, eine ausziehbare Besteckschublade und ein ausziehbarer Blechboden, ein Kühlschrank, ein Staufach, eine Kaffeemaschine und/oder eine Dunstabzugshaube, mittels Zugstreben, die vorzugsweise horizontal angeordnet sind, gegenüber der Rückwand der Nutzfahrzeugkabine beabstandet und befestigt, sodass hierdurch ein besonders stabiles Racksystem entstehen kann, welches auch als Befestigungssystem für weitere Nutzungsgegenstände dienen kann.

Derartige Zugstreben, oder auch Blechböden, können sich im oberen und im unteren Bereich der Nutzfahrzeugkabine jeweils dort befinden, wo ein bogenförmiges Stangenelement angeordnet ist, sodass bei Anordnung von beispielsweise insgesamt vier bogenförmigen Stangenelementen jeweils beispielsweise zwei bis vier horizontal ausgerichtete Zugstreben oder Blechböden zu jedem bogenförmigen Stangenelement vorgesehen sein können. Diese Zugstreben, oder auch Blechböden, können vorteilhafter Weise auch dazu dienen, Führungen sowohl für Schubladen als auch für anderweitige ausziehbare Gegenstände, wie etwa ein ausziehbarer Waschtisch oder eine ausziehbare Toilette, bilden zu können. Aber auch sonstige Einrichtungen, die nicht ausziehbar sind, wie beispielsweise ein Hängeschrank, können mittels geeigneter Zugstreben oder Blechböden ohne Zuhilfenahme von seitlichen Wänden der Nutzfahrzeugkabine oder der rückwärtigen Wand der Nutzfahrzeugkabine innerhalb der Nutzfahrzeugkabine an dem Gestell insbesondere des Racksystems befestigt werden.

Hierdurch kann vorteilhaft auch ermöglicht werden, dass Gegenstände, welche zu derartigen Nutzungen in der Nutzfahrzeugkabine angeordnet werden sollen, problemlos nachträglich in die Nutzfahrzeugkabine eingebaut werden können, ohne dass hierfür eine umfassende Befestigung an den Wänden der Nutzfahrzeugkabine erforderlich ist. Ein derartiges nachträgliches Einbauen insbesondere eines solchen Racksystems bzw. eines Befestigungssystems für derartige Elemente und/oder für die bereits beschriebene Ruheeinrichtung bzw. für das bereits erwähnte Bett im vorderen Bereich der Nutzfahrzeugkabine hat idealerweise zur Folge, dass bisher gebaute Nutzfahrzeugkabinen in unveränderter Form dazu verwendet werden können, in optimierter Weise für ein das Nutzfahrzeug benutzendes Fahrpersonal verwendet werden zu können.

Dies wird auch insbesondere in denjenigen Ländern als vorteilhaft betrachtet, in welchen man aus Sicherheitsgründen die Nutzfahrzeugkabine nur ungern verlässt und somit sämtliche Angelegenheiten, wie Kochen oder das Erledigen eines Toilettengangs, innerhalb der Nutzfahrzeugkabine erledigen möchte. Eine derartige Vorrichtung bzw. ein derartiges Racksystem kann somit mittels geeigneter Befestigungsmittel nachträglich in eine Nutzfahrzeugkabine eingearbeitet und darin befestigt werden. Idealerweise können hierfür geeignete Befestigungsvorrichtungen bereits von Haus aus bei der Herstellung der Nutzfahrzeugkabinen mit eingearbeitet werden.

Vorzugsweise weist die Ruheeinrichtung bzw. das Bett eine Breite von 800 mm oder von 900 mm und eine Länge von mindestens 1950 mm, vorzugsweise von 2000 mm, auf. Somit liegt die Breite der Ruheeinrichtung bzw. des Bettes deutlich über dem Standard, der bisher zwischen 600 mm und 750 mm liegt. Ein komfortabler Einstieg in das Bett kann zusätzlich mittels trittsicherer Stufen, wie die einer Leiter, im hinteren Bereich der Ruheeinrichtung bzw. des Bettes erfolgen.

Der hier bereits erläuterte Hubmechanismus, welcher insbesondere mittels der Tragarme die Ruheeinrichtung bzw. das Bett ein- und ausfährt, kann je nach Ausführung manuell oder elektrisch betätigt werden.

Sofern eine Notsituation eintritt, kann die Ruheeinrichtung bzw. das Bett innerhalb kürzester Zeit auch mittels manueller Betätigung, beispielsweise innerhalb von 5 Sekunden, nach oben verlagert werden, um anschließend das Nutzkraftfahrzeug zu starten und anschließend sofort weiterfahren zu können.

Funktionseinrichtungen, wie beispielsweise Kühlschränke, Herdplatten oder dergleichen, werden vorliegend etwa auch als Einrichtungsbauteile, Einbaumodule oder kurz Module bezeichnet. Bei nahezu sämtlichen derartigen Modulen ist außerdem zu berücksichtigen, dass die Nutzfahrzeugkabine für Wartungsarbeiten in einem Winkel von ca. 70° geklappt werden muss. Hierfür dürfen keine dieser Module, insbesondere auch keine von einem Fahrpersonal in Schränken oder Ablagen verstauten Sachen, ihren Ort verlassen, wenn die Nutzfahrzeugkabine entsprechend gekippt werden sollte. Deshalb ist eine hohe Anforderung an die Befestigung des Racksystems gegenüber den Nutzfahrzeuginnenwänden gegeben. Das gesamte Racksystem ist demzufolge vorteilhafter Weise als ein rahmenartiges Gestell ausgebildet sein. Dies bedeutet, dass seitliche Profilbauteile des rahmenartigen Gestells vorzugsweise an den seitlichen Innenwänden der Nutzfahrzeugkabine und dass obere und untere Profilbauteile des rahmenartigen Gestells vorzugsweise an der Decke bzw. dem Boden der Nutzfahrzeugkabine entlang laufen. Insbesondere hierdurch kann ein komplettes Trenngerüst zwischen dem vorderen und dem hinteren Teil der Nutzfahrzeugkabine entstehen.

Weitere Vorteile, Ziele und Eigenschaften vorliegender Erfindung werden anhand nachfolgender Beschreibung anliegender Zeichnung erläutert, in welcher beispielhaft ein erstes Ausführungsbeispiel einer Nutzfahrzeugkabine mit einem erfindungsgemäßen Racksystem sowie unterschiedliche Profilbauteile dargestellt sind.

Es zeigen
- Figur 1: schematisch eine Querschnittsansicht einer Nutzfahrzeugkabine eines Nutzkraftfahrzeugs mit einem Racksystem umfassend ein konvex ausgebildetes Gestell;
- Figur 2: schematisch eine Frontansicht des konvex ausgebildeten Racksystems aus der Figur 1;
- Figur 3: schematisch eine andere Querschnittsansicht des konvex ausgebildeten Racksystems aus den Figuren 1 und 2 mit einer von einem Hubmechanismus in einer Fahrposition gehaltenen Ruheeinrichtung;
- Figur 4: schematisch eine weitere Querschnittsansicht des konvex ausgebildeten Racksystems aus den Figuren 1 bis 3 mit der in einer Ruheposition gehaltenen Ruheeinrichtung;
- Figur 5: schematisch eine quergeschnittene Ansicht eines ersten möglichen Profils einer ersten Profilstange mit dazugehörigen Verkleidungsblechen;
- Figur 6: schematisch eine quergeschnittene Ansicht eines weiteren möglichen Profils einer Profilstange mit dazugehörigen Verkleidungsblechen und ersten Kunststoffabdeckleisten;
- Figur 7: schematisch eine quergeschnittene Ansicht eines anderen möglichen Profils einer Profilstange mit dazugehörigen Verkleidungsblechen und anderen Kunststoffabdeckleisten;
- Figur 8: schematisch eine quergeschnittene Ansicht eines zusätzlichen möglichen Profils einer Profilschiene;
- Figur 9: schematisch eine quergeschnittene Ansicht einer weiteren Variante eines möglichen Profils einer Profilschiene; und
- Figur 10: schematisch eine quergeschnittene Ansicht von weiteren Profilstangen mit einer weiteren Profilvarianten.

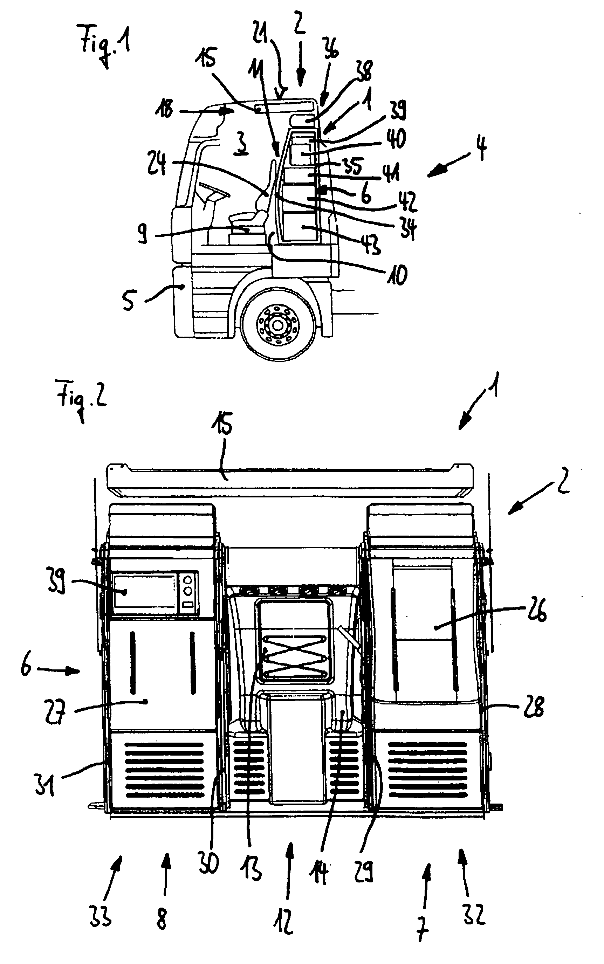

Bei der in den Figuren 1 bis 4 gezeigten Vorrichtung 1 zum Halten von Einrichtungsgegenständen handelt es ich um ein Racksystem 2, welches in eine Nutzfahrzeugkabine 3 eines Nutzfahrzeuges 4 eingebaut werden kann, wobei das Nutzfahrzeug 4 in diesem Ausführungsbeispiel ein Lastkraftwagen 5 ist.

Die Haltevorrichtung 1 bzw. das Racksystem 2 weist ein Gestell 6 auf. Das Gestell 6 ist im Wesentlichen in eine erste Gestellhälfte 7 und in eine zweite Gestellhälfte 8 unterteilt, wobei die erste Gestellhälfte 7 hinter einem Fahrersitz 9 und die zweite Gestellhälfte 8 hinter einem hier nicht näher gezeigten Beifahrersitz angeordnet ist.

Um einen Freiraum 10 innerhalb der Nutzfahrzeugkabine 3 hinter dem Fahrersitz 9 sowie hinter dem Beifahrersitz wesentlich besser nutzen zu können, ist das Gestell 6 und damit auch die Haltevorrichtung 1 sowie das Racksystem 2 hinter dem Fahrersitz 9 und/oder dem Beifahrersitz 11 konvex ausgebildet.

Zusätzlich ist zwischen den beiden Gestellhälften 7 und 8 ein begehbarer Bereich 12 (siehe Figur 2) vorgesehen, in welchem bei diesem Ausführungsbeispiel noch ein klappbarer Tisch 13 an der Rückseite 14 der Nutzfahrzeugkabine 3 befestigt ist. An der Rückseite 14 kann auch eine weitere Sitzgelegenheit befestigt sein. Der begehbare Bereich 12 kann insbesondere auch zum Erreichen einzelner Einrichtungsgegenstände verwendet werden, sodass diese von dem begehbaren Bereich 12 aus gut bedient werden können. Dies gelingt besonders gut, wenn Öffnungen von in dem Racksystem 2 untergebrachten Modulen quer zur Fahrtrichtung ausgerichtet sind. Außerdem können Verschlüsse der Module hierbei gut entlastet werden, wenn die Module quer zur Fahrtrichtung geöffnet werden können, da die Verschlüsse weniger stark belastet werden, insbesondere beim Verzögern des Fahrzeuges.

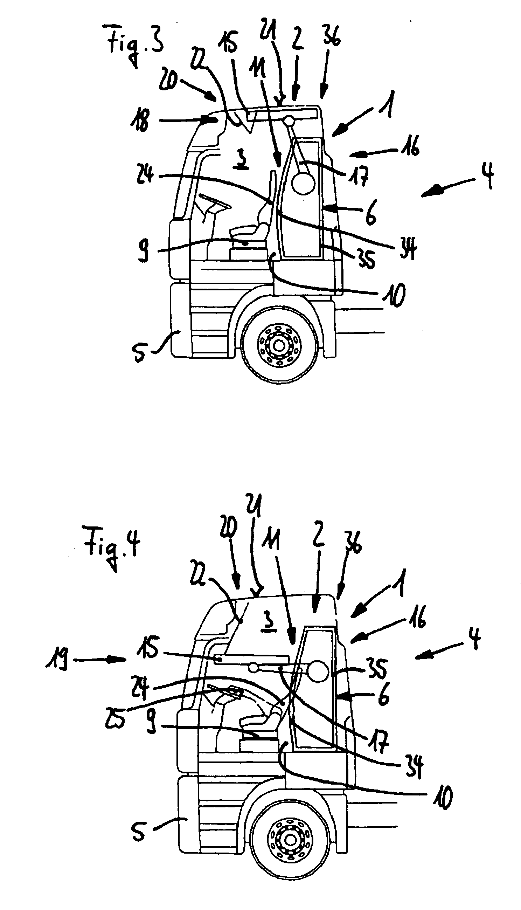

Bei den Einrichtungsgegenständen handelt es sich hierbei um eine Ruheeinrichtung 15, welche mittels eines Hubmechanismus 16 (siehe Figuren 3 und 4) mit Tragarmen 17 verlagerbar an dem Gestell 6 des Racksystems 2 befestigt ist, wobei die Tragarme 17 drehbeweglich an dem Gestell 6 gelagert sind. Insofern kann die Ruheeinrichtung 15, welche hierbei ein Bett für ein Fahrpersonal bereitstellt, zum Einen in eine obere Fahrposition 18 und zum Anderen in eine untere Ruheposition 19 verlagert werden.

Um die Ruheeinrichtung 15 insbesondere in der unteren Ruheposition 19 zusätzlich stabilisieren zu können, sind Mittel 20 zum Halten der Ruheeinrichtung 15 vorgesehen, welche an einem Deckenbereich 21 der Nutzfahrzeugkabine 3 verankert sind. Hierbei sind die Mittel 20 zum Halten der Ruheeinrichtung 15 als Gurte 22 bzw. Riemen 22 ausgebildet, welche problemlos hohe Zugkräfte aufnehmen können.

Wenn die Ruheeinrichtung 15 sich in der unteren Ruheposition 19 befindet, kann der begehbare Bereich 12 zwischen den beiden Gestellhälften 7, 8 vorteilhafter Weise als Zustieg 23 zur Ruheeinrichtung 15 verwendet werden, wodurch die Ruheeinrichtung 15 besonders einfach erreicht werden kann. Vorteilhaft ist es, wenn zum Einstieg in die Ruheeinrichtung 15 im begehbaren Bereich Stufen (hier nicht gezeigt) vorgesehen sind.

Vorteilhafter Weise ist die erste Gestellhälfte 7 derart gestaltet, dass bei eingestellter unterer Ruheposition 19 die Rückenlehne 24 des Fahrersitzes 9 innerhalb des Gestells 6 bzw. innerhalb der der ersten Gestellhälfte 7 des Gestells 6 verlagert ist. Somit kann die Nutzfahrzeugkabine 3 besonders schnell wieder in einen fahrbereiten Zustand überführt werden, da die Rückenlehne 24 des Fahrersitzes 9 im Wesentlichen vertikal ausgerichtet ist. Die Rückenlehne 25 des Beifahrersitzes ist jedoch nach vorne unter die Ruheeinrichtung 15 geklappt (siehe Figur 4).

Damit insbesondere die Rückenlehne 24 bis in das Gestell 6 hinein verlagert werden kann, ist es vorteilhaft, wenn ein dem Fahrersitz 9 zugewandtes Verkleidungsblech 26 (siehe Figur 2) der ersten Gestellhälfte 7 konkav gewölbt ist, sodass sich die Rückenlehne 24 des Fahrersitzes 9 besonders eng an das Verkleidungsblech 26 anschmiegen kann.

Da die Rückenlehne 25 des Beifahrersitzes bevorzugt nach vorne unter die Ruheeinrichtung 15 geklappt wird, kann ein dem Beifahrersitz zugewandtes Verkleidungsblech 27 der zweiten Gestellhälfte 8 problemlos konvex gewölbt sein.

Die Verkleidungsbleche 26 bzw. 27 sind bezüglich ihrer jeweiligen Gestellhälften 7 bzw. 8 zwischen zwei bogenförmig gestalteten und im Wesentlichen vertikal verlaufenden Profilbauteile 28 und 29 bzw. 30 und 31 angeordnet, wobei die bogenförmig gestalteten und im Wesentlichen vertikal verlaufenden Profilbauteile 28 und 29 ein erstes Profilbauteilpaar 32 und die bogenförmig gestalteten und im Wesentlichen vertikal verlaufenden Profilbauteile 30 und 31 ein weiteres Profilbauteilpaar 33 bilden.

Alle bogenförmig gestalteten und im Wesentlichen vertikal verlaufenden Profilbauteile 28 und 29 bzw. 30 und 31 sind vorliegend als bogenförmig gestaltete Profilstangen 34 ausgebildet, welche vertikal in der Nutzkraftfahrzeugkabine 3 ausgerichtet sind.

Im hinteren Teil der Nutzfahrzeugkabine 3 weist das Gestell 6 eher gerade gestaltete und im Wesentlichen vertikal verlaufende Profilbauteile 35 auf, welche an einer dem Fahrersitz 9 und/oder dem Beifahrersitz abgewandten Seite 36 des Gestells 6 angeordnet sind.

Montiert sind die beiden Gestellhälften 7 und 8 auf einer gemeinsamen Bodenplatte 37, wodurch das gesamte Gestell 6 sehr stabil gebaut ist.

Des Weiteren handelt es sich bei den Einrichtungsgegenständen in diesem Ausführungsbeispiel um eine Tasche 38, eine Mikrowelle 39, eine Kaffeemaschine 40, eine mobile Miniküche 41 mit einem Kocher, einen Kühlschrank 42 und einem Staufach 43. Die Tasche 38 wird hierbei mit Gurten auf dem Racksystem 2 befestigt. Ein Fahrer kann sie mit wenigen Handgriffen lösen und mitnehmen, ohne etwa den Inhalt von Staufächern 43 einzeln ausräumen zu müssen.

All die zuvor genannten Einrichtungsgegenstände stellen Funktionseinrichtungen bzw. Module im Sinne der Erfindung dar, wobei diese Funktionseinrichtungen bzw. Module in jeweils geeignete Moduleinheiten 44 des Racksystems 2 verkehrs- und betriebssicher angeordnet sind.

Weitere Module, wie etwa eine hier nicht gezeigte Dunstabzugshaube oder eine nicht gezeigte Besteckschublade können kumulativ noch vorgesehen sein.

Alle Einrichtungsgegenstände bzw. Moduleinheiten 44 können baulich besonders einfach in dem Racksystem 2 fest oder beweglich gelagert werden, da die vorliegenden Profilbauteile 28, 29, 30, 31 und 35 hier nicht näher gezeigte Fugenelemente aufweisen, in welche kompatible Klemm- bzw. Führungselemente befestigt werden können. So können beispielsweise Module auch ausziehbar in dem Racksystem eingebaut werden.

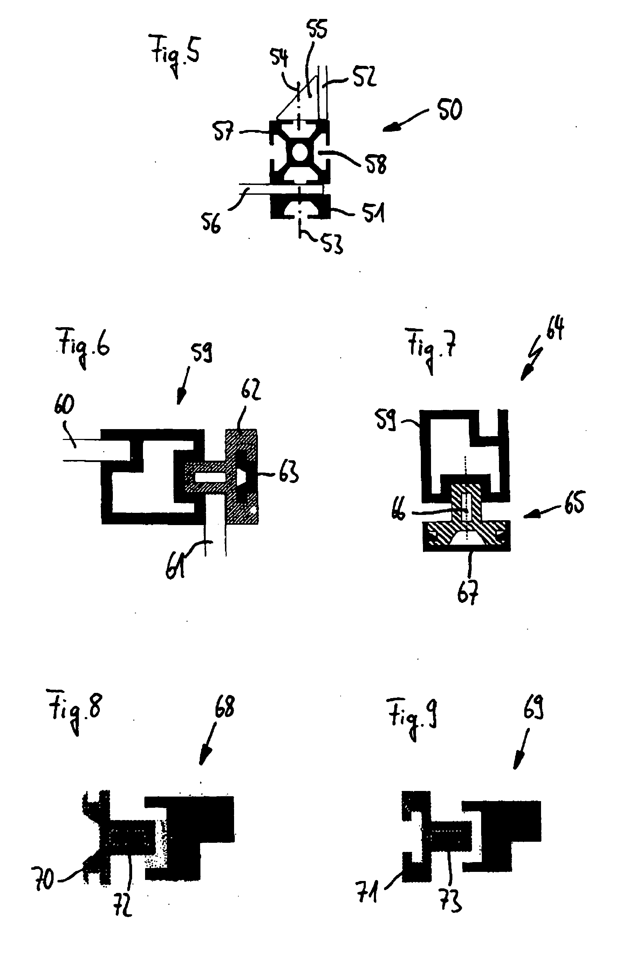

Bei der in der Figur 5 gezeigten weiteren Profilstange 50 ist einerseits ein Profilstreifen 51 und andererseits eine Abdichtwand 52 jeweils mittels einer Verschraubung 53 bzw. 54 fest angeschraubt. Zur besseren Stabilität stützt sich die Abdichtwand 52 zusätzlich mit einem Winkelstück 55 an der Profilstange 50 ab. Eine 6 mm starke Verkleidungswand 56 ist demontierbar mittels des Profilstreifens 51 an der Profilstange 50 verklemmt. Die Profilstange 50 besteht aus einem 40 mm x 40 mm Quadratrohr 57, welches eine Vielzahl an Nuten 58 aufweist, in welchen die Verschraubungen 53 und 54 geeignete Nutsteine (hier nicht dargestellt) verklemmen können.

Bei der gemäß der Figur 6 gezeigten alternativen Profilstange 59 ist eine erste 6 mm starke Verkleidung 60 eingesteckt. Eine weitere 6 mm starke Verkleidung 61 ist an der alternativen Profilstange 59 mittels eines T-förmig gestalteten Profilstreifens 62 klemmend befestigt. Auf dem T-förmig gestalteten Profilstreifen 62 ist noch eine Kunststoffabdeckleiste 63 als Sichtblende aufgeklipst.

Gemäß der Darstellung 64 nach der Figur 7 ist an der alternativen Profilstange 59 ein anders gestalteter Profilstreifen 65 mittels einer Schraube 66 angeschraubt. Um insbesondere die Schraube 66 abzudecken, ist auf dem anders gestalteten Profilstreifen 65 eine Kunststoffblendleiste 67 aufgeklipst.

Die in den Figuren 8 und 9 gezeigten Profilschienen 68 und 69 sind mit weiteren Profilstreifen 70 und 71 versehen, wobei die weiteren Profilstreifen 70 bzw. 71 mittels entsprechender Schraubverbindungen 72 bzw. 73 an der jeweiligen Profilschiene 68 bzw. 69 angeschraubt sind.

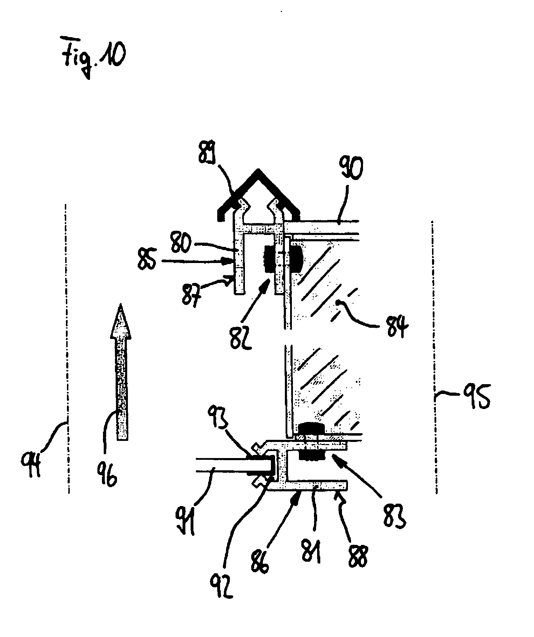

Die in der Figur 10 gezeigten Profilstangen 80 und 81 sind mittels Schraubverbindungen 82 bzw. 83 fest und stabil mit einem Fachboden 84 verschraubt. Hierbei sind die Profilstangen 80, 81 derart gestaltet, dass sie jeweils einen Hinterschnitt 85 bzw. 86 aufweist, der als Schließblech 87, 88 dienen kann, wodurch vorteilhafter Weise die jeweilige Schraubverbindung 82, 83 benutzerseitig nicht zu sehen ist. Auf der vorderen Profilstange 80 ist noch ein Profilstreifen 89 aufgesteckt, mittels welchem eine vordere Verkleidung 90 fest, aber lösbar an der vorderen Profilstange 80 festgelegt ist. Eine weitere Verkleidung 91 ist in einer Profilnut 92 der hinteren Profilstange 81 eingesteckt und gelagert. Zwischen der weiteren Verkleidung 91 und der hinteren Profilstange 81 ist eine Lagereinrichtung 93 angeordnet, sodass eine sichere und feste Verbindung gewährleistet werden kann.

Während die vordere Profilstange 80 und die vordere Verkleidung 90 Fahrzeugsitzen (hier nicht gezeigt) zugewandt sind, befinden sich die hintere Profilstange 81 und die weitere Verkleidung 91 hinten in der Mitte einer Fahrzeugkabine. Dementsprechend ist die Fahrzeugmitte 94 links und eine Sitzmitte 95 eines Fahrzeugsitzes rechts angedeutet. Zusätzlich ist noch die Fahrtrichtung 96 eingezeichnet.

### Bezugszeichenliste

- 1: Vorrichtung zum Halten
- 2: Racksystem
- 3: Nutzfahrzeugkabine
- 4: Nutzfahrzeug
- 5: Lastkraftwagen
- 6: Gestell
- 7: erste Gestellhälfte
- 8: zweite Gestellhälfte
- 9: Fahrersitz
- 10: Freiraum
- 11: zugewandte Seite / zugewandter Bereich
- 12: begehbarer Bereich
- 13: klappbarer Tisch
- 14: Rückseite
- 15: Ruheeinrichtung
- 16: Hubmechanismus
- 17: Tragarme
- 18: Fahrposition
- 19: Ruheposition
- 20: Mittel zum Halten
- 21: Deckenbereich
- 22: Gurte bzw. Riemen
- 23: Zustieg
- 24: Rückenlehne des Fahrersitzes
- 25: Rückenlehne des Beifahrersitzes
- 26: konkav gewölbtes Verkleidungsblech
- 27: konvex gewölbtes Verkleidungsblech
- 28: erstes bogenförmig gestaltete und im Wesentlichen vertikal verlaufende Profilbauteil
- 29: zweites bogenförmig gestaltete und im Wesentlichen vertikal verlaufende Profilbauteil
- 30: drittes bogenförmig gestaltete und im Wesentlichen vertikal verlaufende Profilbauteil
- 31: viertes bogenförmig gestaltete und im Wesentlichen vertikal verlaufende Profilbauteil
- 32: erstes Profilbauteilpaar
- 33: zweites Profilbauteilpaar
- 34: bogenförmig gestaltete Profilstangen
- 35: gerade gestaltete und im Wesentlichen vertikal verlaufende Profilbauteile
- 36: abgewandte Seite
- 37: gemeinsame Bodenplatte
- 38: Tasche
- 39: Mikrowelle
- 40: Kaffeemaschine
- 41: mobile Miniküche
- 42: Kühlschrank
- 43: Staufach
- 44: Moduleinheiten

- 50: weitere Profilstange
- 51: Profilstreifen
- 52: Abdichtwand
- 53: erste Verschraubung
- 54: weitere Verschraubung
- 55: Winkelstück
- 56: Verkleidungswand
- 57: Quadratrohr
- 58: Nuten
- 59: alternative Profilstange
- 60: erste Verkleidung
- 61: weitere Verkleidung
- 62: T-förmig gestalteter Profilstreifen
- 63: Kunststoffabdeckleiste
- 64: Darstellung
- 65: anders gestalteter Profilstreifen
- 66: Schraube
- 67: Kunststoffblendleiste
- 68: erste Profilschiene
- 69: zweite Profilschiene
- 70: erster weiterer Profilstreifen
- 71: zweiter weiterer Profilstreifen
- 72: erste Schraubverbindung
- 73: zweite Schraubverbindung

- 80: vordere Profilstange
- 81: hintere Profilstange
- 82: erste Schraubverbindung
- 83: zweite Schraubverbindung
- 84: Fachboden
- 85: erster Hinterschnitt
- 86: weiterer Hinterschnitt
- 87: erstes Schließblech
- 88: weiteres Schließblech
- 89: Profilstreifen
- 90: vordere Verkleidung
- 91: weitere Verkleidung
- 92: Profilnut
- 93: Lagereinrichtung
- 94: Fahrzeugmitte
- 95: Sitzmitte
- 96: Fahrtrichtung

## Patentansprüche

1. Vorrichtung (1) zum Halten von Einrichtungsgegenständen, wie etwa einer Ruheeinrichtung (15) oder dergleichen, mit einem Gestell (6), welches in einer Nutzfahrzeugkabine (3) hinter einem Fahrersitz (9) und/oder hinter einem Beifahrersitz anordenbar ist.
das Gestell (6) an seiner dem Fahrersitz (9) und/oder dem Beifahrersitz zugewandten Seite (11) konvex ausgebildet ist,
wobei eine erste Gestellhälfte (7) des Gestells (6) hinter einem Fahrersitz (9) und eine weitere Gestellhälfte (8) des Gestells (6) hinter einem Beifahrersitz angeordnet ist und innerhalb des Gestells Einrichtungsgegenstände unterbringbar sind,
**dadurch gekennzeichnet, dass**
die Vorrichtung bogenförmig gestaltete und im Wesentlichen vertikal verlaufende Profilbauteile (28, 29, 30, 31) aufweist, wobei jeweils zwei bogenförmig gestaltete und vertikal verlaufende Profilbauteile (28, 29 bzw. 30, 31) ein Profilbauteilpaar (32, 33) bilden, zwischen welchen jeweils ein Verkleidungsblech (26, 27) des Gestells (6) angeordnet ist.

2. Racksystem (2) mit einem Gestell (6) für eine Nutzfahrzeugkabine (3),
wobei eine erste Gestellhätfte (7) des Gestells (6) hinter einem Fahrersitz (9) und eine weitere Gestellhälfte (8) des Gestells (6) hinter einem Beifahrersitz angeordnet ist, wobei zwischen den beiden Gestellhälften (7, 8) ein begehbarer Bereich (12) der Nutzfahrzeugkabine (3) angeordnet ist und innerhalb des Gestells Einrichtungsgegenstände unterbringbar sind,
**dadurch gekennzeichnet, dass**
das Racksystem bogenförmig gestaltete und im Wesentlichen vertikal verlaufende Profilbauteile (28, 29, 30, 31) aufweist, wobei jeweils zwei bogenförmig gestaltete und vertikal verlaufende Profilbauteile (28, 29 bzw. 30, 31) ein Profilbauteilpaar (32, 33) bilden, zwischen welchen jeweils ein Verkleidungsblech (26, 27) des Gestells (6) angeordnet ist.

3. Racksystem (2) nach Anspruch 2,
**dadurch gekennzeichnet, dass**
wenigstens eine der Gestellhälften (7, 8), vorzugsweise beide Gestellhälften (7, 8), in einem dem Fahrersitz (9) und/oder einem Beifahrersitz zugewandten Bereich (11) konvex ausgebildet ist.

4. Vorrichtung (1) oder Racksystem (2) nach einem der vorangegangenen Ansprüche,
**dadurch gekennzeichnet, dass**
das Gestell (6) im Wesentlichen vertikal verlaufende Profilbauteile (28, 29, 30, 31) aufweist, welche bogenförmig gestaltet sind, wobei
die bogenförmig gestalteten und im Wesentlichen vertikal verlaufenden Profilbauteile (28, 29, 30, 31) an einer dem Fahrersitz (9) und/oder dem Beifahrersitz zugewandten Seite (11) oder in einem dem Fahrersitz (9) und/oder dem Beifahrersitz zugewandten Bereich (11) angeordnet sind.

5. Vorrichtung (1) oder Racksystem (2) nach einem der vorangegangenen Ansprüche,
**dadurch gekennzeichnet, dass**
im Wesentlichen vertikal verlaufende Profilbauteile (28, 29, 30, 31) des Gestells (6) bogenförmig gestaltete Profilstangen (34; 50; 59; 80, 81), Profilschienen (68; 69) und/oder Profilbleche aufweisen.

6. Vorrichtung (1) oder Racksystem (2) nach einem der vorangegangenen Ansprüche,
**dadurch gekennzeichnet, dass**,
das Verkleidungsblech (27) zumindest teilweise konvex gewölbt ist und/oder das Verkleidungsblech (26) zumindest teilweise konkav gewölbt ist.

7. Vorrichtung (1) oder Racksystem (2) nach einem der vorangegangenen Ansprüche,
**dadurch gekennzeichnet, dass**
vertikal verlaufende Profilbauteile (28, 29, 30, 31) des Gestells (6) eine zumindest teilweise konvex gestaltete Einhüllende der Vorrichtung (1) bzw. des Racksystems (2) bilden, und innerhalb der konvex gestalteten Einhüllenden konvex und/oder konkav gewölbte Verkleidungsbleche (26, 27) angeordnet sind,
wobei innerhalb der konvex gestalteten Einhüllenden zumindest einer (9) der Sitze (9) oder eine Rücklehne (24) zumindest einer (9) der Sitze (9) wenigstens teilweise anordenbar ist.

8. Vorrichtung (1) oder Racksystem (2) nach einem der vorangegangenen Ansprüche,
**gekennzeichnet durch**
eine Ruheeinrichtung (15) mit einem Zustieg (23), wobei der Zustieg (23) innerhalb des Gestells (6), insbesondere zwischen zwei Gestellhälften des Gestells (6), angeordnet ist,
wobei die Ruheeinrichtung (15) in eine Fahrposition (18) mittels drehbeweglich gelagerten Tragarmen bringbar ist, bei welcher die Ruheeinrichtung (15) oberhalb der Vorrichtung (1) oder oberhalb des Racksystems (2) angeordnet ist,
wobei die Ruheeinrichtung (15) in eine Ruheposition (19) mittels den drehbeweglich gelagerten Tragarmen bringbar ist, bei welcher die Ruheeinrichtung (15) vor der Vorrichtung (1) oder vor dem Racksystem (2) angeordnet ist,
wobei der Fahrersitz (9) bei eingestellter Ruheposition (19) der Ruheeinrichtung (15) innerhalb des Gestells (6), vorzugsweise innerhalb einer Gestellhälfte (7) des Gestells (6), bzw. innerhalb einer Einhüllenden des Gestells (6), angeordnet ist.

9. Vorrichtung oder (1) Racksystem (2) nach einem der vorangegangenen Ansprüche,
**gekennzeichnet durch**
einen Hubmechanismus (16) zum Verlagern einer Ruheeinrichtung (15), welcher drehbar gelagerte Tragarme (17) umfasst, und/oder
Mittel (20) zum Halten einer Ruheeinrichtung (15), welche an Deckenbereichen (21) der Nutzfahrzeugkabine (3) verankert sind.

10. Vorrichtung (1) oder Racksystem (2) nach einem der vorangegangenen Ansprüche,
**gekennzeichnet durch**
Moduleinheiten (44) zum Aufnehmen von Funktionseinrichtungen, wie vorzugsweise Schubladen, einem Kühlschrank (42), einer Kaffeemaschine (40) und/oder dergleichen,
wobei wenigstens eine der Moduleinheiten (44) von einem begehbaren Bereich (12) der Nutzfahrzeugkabine (3), vorzugsweise von einem zwischen zwei Gestellhälften (7, 8) des Gestells (6) angeordneten Bereich (12), aus zugänglich ist,
wobei Module, wie etwa ein Herd, ein Waschbecken, eine Toilette oder dergleichen, wenigstens einer Moduleinheit (44) aus der Vorrichtung (1) bzw. dem Racksystem (2) ausziehbar innerhalb des Gestells (6) angeordnet sind.

11. Vorrichtung (1) oder Racksystem (2) nach einem der vorangegangenen Ansprüche,
**gekennzeichnet durch**
gerade gestaltete und im Wesentlichen vertikal verlaufende Profilbauteile (35) des Gestells (6), welche an einer dem Fahrersitz (9) und/oder dem Beifahrersitz abgewandten Seite (36) des Gestells (6) angeordnet sind,
und/oder im Wesentlichen horizontal verlaufende Profilbauteile des Gestells (6), welche das Gestell (6) in horizontale Ebenen unterteilen.

12. Vorrichtung (1) oder Racksystem (2) nach einem der vorangegangenen Ansprüche,
**dadurch gekennzeichnet, dass**
Gestellhälften (7, 8) des Gestells (6) eine gemeinsame Bodenplatte (37) aufweisen.

13. Vorrichtung (1) oder Racksystem (2) nach einem der vorangegangenen Ansprüche,
**dadurch gekennzeichnet, dass**
Profilbauteile (28, 29, 30, 31, 35) der Vorrichtung (1) bzw. des Racksystems (2), insbesondere des Gestells (6), Fugenelemente (58) zum Aufnehmen von darin verschiebbaren Klemmelementen umfasst.

14. Vorrichtung (1) oder Racksystem (2) nach einem der vorangegangenen Ansprüche,
**gekennzeichnet durch**
einen modularen Aufbau.

15. Nutzkraftfahrzeug (4) mit einer Fahrzeugführerkabine (3),
**dadurch gekennzeichnet, dass**
die Fahrzeugführerkabine (3) eine Vorrichtung (1) oder ein Racksystem (2) nach einem der vorstehenden Ansprüche aufweist.

## Claims

1. Installation (1) for retaining fittings, such as a rest facility (15) or the like, comprising a holder (6) which can be arranged behind a driver seat (9) and/or behind a passenger seat in a commercial vehicle cabin (3), said holder (6) being convex at its side (11) facing the driver seat (9) and/or the passenger seat, there being arranged a first holder half (7) of the holder (6) behind a driver seat (9) and a further holder half (8) of the holder (6) behind a passenger seat and it being possible to house fittings within the holder, **characterised in that** the installation has curved and substantially profile components extending in a vertical manner (28, 29, 30, 31), each two curved and profile components extending in a vertical manner (28, 29 and 30, 31) forming a profile component pair (32, 33), between each of which a trim panel (26, 27) of the holder (6) is arranged.

2. Rack system (2) comprising a holder (6) for a commercial vehicle cabin (3), there being arranged a first holder half (7) of the holder (6) behind a driver seat (9) and a further holder half (8) of the holder (6) behind a passenger seat, a walk-in region (12) of the commercial vehicle cabin (3) being arranged between the two holder halves (7, 8) and it being possible to house fittings within the holder, **characterised in that** the rack system has curved and substantially profile components extending in a vertical manner (28, 29, 30, 31), each two curved and vertical profile components (28, 29 and 30, 31) forming a profile component pair (32, 33), between each of which a trim panel (26, 27) of the holder (6) is arranged.

3. Rack system (2) according to claim 2, **characterised in that** at least one of the holder halves (7, 8) is, or preferably the two holder halves (7, 8) are, convex in a region (11) facing the driver seat (9) and/or a passenger seat.

4. Installation (1) or rack system (2) according to any of the preceding claims, **characterised in that** the holder (6) has substantially profile components extending in a vertical manner (28, 29, 30, 31) which are curved, the curved and substantially profile components extending in a vertical manner (28, 29, 30, 31) being arranged on a side (11) facing the driver seat (9) and/or the passenger seat or in a region (11) facing the driver seat (9) and/or the passenger seat.

5. Installation (1) or rack system (2) according to any of the preceding claims, **characterised in that** substantially profile components extending in a vertical manner (28, 29, 30, 31) of the holder (6) have curved profile rods (34; 50; 59; 80, 81), profile rails (68; 69) and/or profile panels.

6. Installation (1) or rack system (2) according to any of the preceding claims, **characterised in that** the trim panel (27) is convex at least in part and/or the trim panel (26) is concave at least in part.

7. Installation (1) or rack system (2) according to any of the preceding claims, **characterised in that** profile components extending in a vertical manner (28, 29, 30, 31) of the holder (6) form an enclosure, which is convex at least in part, of the installation (1) or of the rack system (2) respectively, and convex and/or concave trim panels (26, 27) are arranged within the convex enclosure, it being possible to arrange at least one (9) of the seats (9) or a backrest (24) of at least one (9) of the seats (9) within the convex enclosure at least in part.

8. Installation (1) or rack system (2) according to any of the preceding claims, **characterised by** a rest facility (15) comprising an access means (23), the access means (23) being arranged within the holder (6), in particular between two holder halves of the holder (6), it being possible to move the rest facility (15) into a travel position (18) by means of rotatably mounted carry arms, in which travel position the rest facility (15) is arranged above the installation (1) or above the rack system (2), it being possible to move the rest facility (15) into a rest position (19) by means of the rotatably mounted carry arms, in which rest position the rest facility (15) is arranged in front of the installation (1) or in front of the rack system (2), the driver seat (9) being arranged within the holder (6), preferably within one holder half (7) of the holder (6), or respectively within an enclosure of the holder (6), when the rest facility (15) is in the rest position (19).

9. Installation (1) or rack system (2) according to any of the preceding claims, **characterised by** a lifting mechanism (16) which is intended to displace a rest facility (15) and comprises rotatably mounted carry arms (17), and/or by means (20) which are intended to retain a rest facility (15) and are anchored to roof regions (21) of the commercial vehicle cabin (3).

10. Installation (1) or rack system (2) according to any of the preceding claims, **characterised by** modular units (44) for accommodating functional fittings, such as preferably cupboards, a refrigerator (42), a coffee machine (40) and/or the like, at least one of the modular units (44) being accessible from a walk-in region (12) of the commercial vehicle cabin (3), preferably from a region (12) between two holder halves (7, 8) of the holder (6), modules, such as a stove, a sink, a toilet or the like, of at least one modular unit (44) being arranged within the holder (6) so as to be removable from the installation (1) or the rack system (2).

11. Installation (1) or rack system (2) according to any of the preceding claims, **characterised by** straight and substantially profile components extending in a vertical manner (35) of the holder (6), which are arranged on a side (36) of the holder (6) facing away from the driver seat (9) and/or the passenger seat, and/or by substantially horizontal profile components of the holder (6), which split the holder (6) into horizontal levels.

12. Installation (1) or rack system (2) according to any of the preceding claims, **characterised in that** holder halves (7, 8) of the holder (6) have a common base plate (37).

13. Installation (1) or rack system (2) according to any of the preceding claims, **characterised in that** profile components (28, 29, 30, 31, 35) of the installation (1) or of the rack system (2) respectively, in particular of the holder (6), comprise groove elements (58) for accommodating clamping elements which can be slid therein.

14. Installation (1) or rack system (2) according to any of the preceding claims, **characterised by** a modular structure.

15. Commercial vehicle (4) comprising a vehicle driver cabin (3), **characterised in that** the vehicle driver cabin (3) has an installation (1) or a rack system (2) according to any of the preceding claims.

## Revendications

1. Dispositif (1) de maintien d'objets d'équipement, comme par exemple un équipement de repos (15) ou similaire, doté d'un châssis (6), qui peut être disposé dans un habitacle de véhicule utilitaire (3) derrière un siège conducteur (9) et/ou derrière un siège passager,
le châssis (6) est façonné de manière convexe sur son côté (11) orienté vers le siège conducteur (9) et/ou le siège passager,
une première moitié (7) du châssis (6) étant disposée derrière un siège conducteur (9) et une autre moitié (8) du châssis (6) étant disposée derrière un siège passager et des objets d'équipement pouvant être introduits à l'intérieur du châssis,
**caractérisé en ce que**
le dispositif présente des composants profilés (28, 29, 30, 31) formés en arc et essentiellement verticaux, respectivement deux composants profilés (28, 29 ou 30, 31) formés en arc et s'étendant de façon verticale constituant une paire de composants profilés (32, 33) entre lesquels est disposée, respectivement, une tôle d'habillage (26, 27) du châssis (6).

2. Système de bâti (2) doté d'un châssis (6) pour un habitacle d'un véhicule utilitaire (3),
une première moitié (7) du châssis (6) étant disposée derrière un siège conducteur (9) et une autre moitié (8) du châssis (6) étant disposée derrière un siège passager,
une zone accessible (12) de l'habitacle du véhicule utilitaire (3) étant disposée entre les deux moitiés de châssis (7, 8) et les objets d'équipement pouvant être introduits à l'intérieur du châssis,
**caractérisé en ce que**
le système de bâti présente des composants profilés (28, 29, 30, 31) formés en arc et s'étendant essentiellement de façon verticale, respectivement deux composants profilés (28, 29 ou 30, 31) formés en arc et verticaux constituant une paire de composants profilés (32, 33) entre lesquels est disposée, respectivement, une tôle d'habillage (26, 27) du châssis (6).

3. Système de bâti (2) selon la revendication 2,
**caractérisé en ce qu'**
au moins une des moitiés de châssis (7, 8), de préférence les deux moitiés de châssis (7, 8), est façonnée de manière convexe dans une zone (11) orientée vers le siège conducteur (9) et/ou un siège passager.

4. Dispositif (1) ou système de bâti (2) selon l'une quelconque des revendications précédentes, **caractérisé en ce que** le châssis (6) présente des composants profilés (28, 29, 30, 31) s'étendant essentiellement de façon verticale, qui sont formés en arc, les composants profilés (28, 29,30, 31) formés en arc et s'étendant essentiellement de façon verticale étant disposés sur un côté (11) orienté vers le siège conducteur (9) et/ou le siège passager ou dans une zone (11) orientée vers le siège conducteur (9) et/ou le siège passager.

5. Dispositif (1) ou système de bâti (2) selon l'une quelconque des revendications précédentes, **caractérisé en ce que** les composants profilés (28, 29, 30, 31) s'étendant essentiellement de façon verticale du châssis (6) présentent des tiges profilées (34 ; 50 ; 59 ; 80, 81) formées en arc, des rails profilés (68 ; 69) et/ou des tôles profilées.

6. Dispositif (1) ou système de bâti (2) selon l'une quelconque des revendications précédentes, **caractérisé en ce que** la tôle d'habillage (27) est incurvée de manière au moins partiellement convexe et/ou la tôle d'habillage (26) est incurvée de manière au moins partiellement concave.

7. Dispositif (1) ou système de bâti (2) selon l'une quelconque des revendications précédentes, **caractérisé en ce que** les composants profilés (28, 29, 30, 31) s'étendant de fa çon verticale du châssis (6) forment une extrémité d'enveloppe de forme au moins partiellement convexe du dispositif (1) ou respectivement du système de bâti (2) et, des tôles d'habillage (26, 27) incurvées de manière convexe et/ou concave sont disposées à l'intérieur des extrémités d'enveloppes de forme convexe, au moins un (9) des sièges (9) ou un dossier (24) d'au moins un (9) des sièges (9) peut être disposé au moins partiellement à l'intérieur des extrémités d'enveloppes de forme convexe.

8. Dispositif (1) ou système de bâti (2) selon l'une quelconque des revendications précédentes, **caractérisé par** un équipement de repos (15) doté d'un accès (23), l'accès (23) étant disposé à l'intérieur du châssis (6), en particulier entre les deux moitiés du châssis (6), l'équipement de repos (15) pouvant être amené, à l'aide de bras de support montés de manière mobile sur un axe, dans une position de conduite (18) dans laquelle l'équipement de repos (15) est disposé au-dessus du dispositif (1) ou au-dessus du système de bâti (2), l'équipement de repos (15) pouvant être amené, à l'aide des bras de support montés de manière mobile sur un axe, dans une position de repos (19) dans laquelle l'équipement de repos (15) est disposé devant le dispositif (1) ou devant le système de bâti (2), le siège conducteur (9) étant disposé, lorsque l'équipement de repos (15) est réglé en position de repos (19), à l'intérieur du châssis (6), de préférence à l'intérieur d'une moitié (7) du châssis (6), ou respectivement à l'intérieur d'une extrémité d'enveloppe du châssis (6).

9. Dispositif (1) ou système de bâti (2) selon l'une quelconque des revendications précédentes, **caractérisé par** un mécanisme de levage (16) pour le déplacement d'un équipement de repos (15), qui comprend des bras de support (17) montés de manière mobile, et/ou des moyens (20) de maintien d'un équipement de repos (15), qui sont ancrés dans des zones du plafond (21) de l'habitacle du véhicule utilitaire (3).

10. Dispositif (1) ou système de bâti (2) selon l'une quelconque des revendications précédentes, **caractérisé par** des unités modulaires (44) destinées à intégrer des dispositifs fonctionnels, comme de préférence des tiroirs, un réfrigérateur (42), une machine à café (40) et/ou similaires, au moins une des unités modulaires (44) étant accessibles à partir d'une zone d'accès (12) de l'habitacle du véhicule utilitaire (3), de préférence, à partir d'une zone (12) étant disposée entre les deux moitiés (7, 8) du châssis (6), des modules, par exemple un four, un lavabo, des toilettes ou similaires, d'au moins une unité modulaire (44) étant disposés à l'intérieur du châssis (6) de manière à pouvoir être ôtée du dispositif (1) ou respectivement du système de bâti (2).

11. Dispositif (1) ou système de bâti (2) selon l'une quelconque des revendications précédentes, **caractérisé par** des composants profilés (35) droits et s'étendant essentiellement de façon verticale du châssis (6), qui sont disposés sur un côté (36) du châssis (6) opposé au siège conducteur (9) et/ou au siège passager et/ou des composants profilés s'étendant essentiellement de façon horizontale du châssis (6), qui divisent le châssis (6) en plans horizontaux.

12. Dispositif (1) ou système de bâti (2) selon l'une quelconque des revendications précédentes, **caractérisé en ce que** les moitiés (7, 8) du châssis (6) présentent une plaque de fond (37) commune.

13. Dispositif (1) ou système de bâti (2) selon l'une quelconque des revendications précédentes, **caractérisé en ce que** les composants profilés (28, 29, 30, 31, 35) du dispositif (1) ou respectivement du système de bâti (2), en particulier du châssis (6), comprennent des éléments de jointures (58) destinés à intégrer des éléments de blocage coulissant à l'intérieur.

14. Dispositif (1) ou système de bâti (2) selon l'une quelconque des revendications précédentes, **caractérisé par** une structure modulaire.

15. Véhicule utilitaire (4) doté d'un habitacle de conducteur (3), **caractérisé en ce que** l'habitacle du conducteur (3) présente un dispositif (1) ou un système de bâti (2) selon l'une quelconque des revendications précédentes.
